# EUROPÄISCHE PATENTSCHRIFT

(11) **EP 1 798 167 B1**
(45) Veröffentlichungstag und Bekanntmachung des Hinweises auf die Patenterteilung: **12.08.2009**
(21) Anmeldenummer: 06126152.5
(22) Anmeldetag: 14.12.2006
(51) Int. Cl.: B65G 17/00, B65G 21/20, B65G 47/84

(54) **Fördervorrichtung**
Conveyor device
Dispositif de transport

(30) Priorität: 16.12.2005 DE 202005019850 U
(43) Veröffentlichungstag der Anmeldung: 20.06.2007
(73) Patentinhaber: Dittrich, Andreas, 27308 Kirchlinteln (DE)
(72) Erfinder: Dittrich, Andreas, 27308 Kirchlinteln (DE)
(74) Vertreter: von Ahsen, Erwin-Detlef

(56) Entgegenhaltungen:
- EP-A1- 0 043 399
- EP-A1- 0 590 266
- GB-A- 1 089 295
- GB-A- 1 106 263
- US-A1- 4 143 752
- US-A1- 4 699 266

## Beschreibung

Die Erfindung betrifft eine Fördervorrichtung mit Trägern für das zu fördernde Produkt, wobei die Träger durch Mitnehmer in Förderrichtung transportierbar sind und zwischen den Trägern und den Mitnehmer eine Fangeinrichtung für von einem Träger herunterfallendes Produkt angeordnet ist.

Konkret befaßt sich die Erfindung mit sogenannten Förder- und Verteiltischen, wie sie vornehmlich in Verpackungsanlagen eingesetzt werden. Mittels der Förder- und Verteiltische werden in einer bestimmten Anzahl in Förderrichtung gesehen nebeneinander angeordneten Produktlinien transportierte Produkte auf eine höhere Anzahl nebeneinanderliegender Produktlinien verteilt oder zu einer geringeren Anzahl von Produktlinien zusammengefaßt. In der Praxis weisen solche Förder- und Verteiltische quer zur Förderrichtung verlaufende und in Förderrichtung transportierbare Stangen auf, auf welchen Mitnehmer mit Trägern für das Produkt verschieblich angeordnet sind. Die Träger sind durch die Stangen in Förderrichtung transportierbar. Gleichzeitig sind die Träger mit den Mitnehmern in Längsrichtung der Stangen, also quer zur Förderrichtung, verschieblich geführt. Meist ist an der dem Träger abgewandten Seite des Mitnehmers ein Dom angeordnet, welcher in einer feststehenden Kulisse geführt ist. Die Kulisse ist mit entsprechenden Weichen versehen, um die Mitnehmer und mit ihnen die Träger quer zur Förderrichtung zu führen.

Durch die Stangen entsteht eine Art Gitterstruktur, durch welches eventuell von den Trägern herunterfallendes Produkt hindurchfallen kann. Hierdurch wird der Förderund verteiltisch verschmutzt. Heruntergefallenes Produkt ist unbrauchbar und muß entsorgt werden.

Aus der EP 0 590 266 A1 ist eine Fördervorrichtung mit einer dünnen Platte aus nicht magnetisierbarem Material bekannt. Unter der Platte sind verschiebbare Magnetelemente angeordnet, die mit weiteren Magnetelementen zusammenwirken, die in Unterlagen angeordnet sind. Hierbei liegen die Unterlagen als Träger für das zu transportierende Produkt auf der Platte auf. Im Betrieb bewegen sich die Unterlagen auf der feststehenden Platte. Nachteilig ist hierbei eine ständige Reibung zwischen den Unterlagen und der Platte. Weiter bleibt ein herunterfallendes Produkt auf der Platte liegen. Hierdurch kann der Betriebsablauf gestört werden und/oder das herabgefallene Produkt durch nachfolgende Unterlagen beschädigt werden.

Es ist das der Erfindung zugrunde liegende Problem, eine Fördervorrichtung der eingangs genannten Art derart weiterzubilden, daß die Fördervorrichtung durch herunterfallendes Produkt nicht verschmutzt und das Produkt möglichst weiter verwendbar ist, auch wenn es herunterfällt, und die Reibung zwischen Träger und Fangeinrichtung reduziert ist.

Zur Lösung dieses Problems ist die erfindungsgemäße Fördervorrichtung dadurch gekennzeichnet, dass die Fangeinrichtung ein umlaufender Gurt ist.

Durch die zwischen den Trägern und den Mitnehmern angeordnete Fangeinrichtung fällt eventuell einmal von einem Träger rutschendes Produkt nicht mehr unmittelbar in die Fördervorrichtung, sondern bleibt auf der Fangeinrichtung liegen. Hierdurch ist sichergestellt, daß die Fördervorrichtung nicht mehr verschmutzt wird. Auch ist weitestgehend sichergestellt, daß versehentlich herunterrutschendes Produkt selbst nicht mehr verschmutzt oder beschädigt wird, so daß es in den meisten Fällen weiterverwendet werden kann.

Hierbei ist die Fangeinrichtung als ein umlaufender Gurt ausgebildet. Ein umlaufender Gurt hat gegenüber einer ebenen Platte, welche aufgrund ihrer spezifischen Eigenschaften feststehend montiert werden muß, den Vorteil, zusammen mit den Mitnehmern und den Trägern umzulaufen. Hierdurch tritt zwischen Gurt und Träger in Förderrichtung gesehen keine Relativbewegung und damit keine Reibung auf. Nur in den Bereichen der Weichen, in denen die Träger auch quer zur Förderrichtung bewegt werden, tritt Reibung auf. Darüber hinaus wird eventuell von einem Träger herunterfallendes Produkt durch den umlaufenden Gurt, wie bei einem Förderband, von der Fördervorrichtung abtransportiert, beispielsweise zu einer Produktsammelstation.

Der umlaufende Gurt sollte dehnbar sein. Auf diese Weise legt er sich unter Spannung gut an die Mitnehmer an. Ferner kann der Gurt Kettenlängungen einer Antriebskette kompensieren.

Nach einer konstruktiven Ausgestaltung der Erfindung sind die Träger und/oder der Mitnehmer mit komplementären Magneten ausgerüstet. Die Träger werden also aufgrund von Magnetkräften von dem jeweils zugehörigen Mitnehmer mitgenommen. Vorzugsweise sind jeweils zwei Magneten vorgesehen. Hierdurch ist eine bestimmte Orientierung für den Träger vorgegeben. Der Träger kann sich nicht ungewollt verdrehen. Weiterhin können zwei Magneten mittels eines Kerns miteinander verbunden sein. Dieses erhöht den magnetischen Fluß und stärkt dadurch die Magnetischen Kräfte.

Um die Reibung des Trägers auf der Fangeinrichtung, also vorzugsweise auf der ebenen Platte oder dem umlaufenden Gurt zu minimieren, können der Träger und/oder die Fangeinrichtung mit einer die Reibung vermindernden Beschichtung, beispielsweise einer Teflonbeschichtung, versehen sein.

Die Erfindung wird nachfolgend anhand eines in der Zeichnung dargestellten Ausführungsbeispiels erläutert. In dieser zeigen:
- Fig. 1: einen Abschnitt einer Fördervorrichtung mit den Erfindungsmerkmalen perspektivischer Draufsicht,
- Fig. 2: einen Mitnehmer für einen Förderer gemäß Fig. 1 in perspektivischer Draufsicht,
- Fig. 3: einen Produktträger für den Förderer gemäß Fig. 1 in Draufsicht,
- Fig. 4: den Produktträger gemäß Fig. 3 in Seitenansicht,
- Fig. 5: den Produktträger gemäß Fig. 3 im Querschnitt in der Ebene V. - V. gemäß Fig. 4.

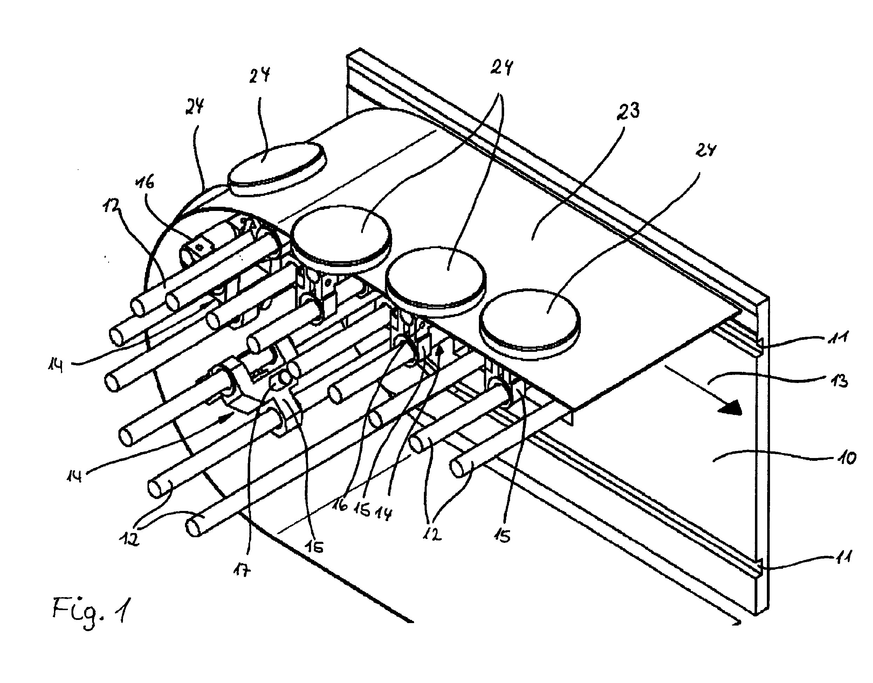

Die in Fig. 1 gezeigte Fördervorrichtung weist seitliche Führungsbleche 10 auf. In jedes Führungsblech 10 ist als Kulisse eine umlaufende Nut 11 vorgesehen. In dieser Nut 11 sind mehrere, vorzugsweise äquidistant verteilte Stangen 12 geführt. Die Stangen 12 erstrecken sich quer zur Förderrichtung 13 und greifen mit ihrem einen Ende in die Nut 11 des einen Führungsblechs 10 und mit ihrem anderen Ende in die Nut 11 des gegenüberliegenden Führungsbleches 10. Mittels einer nicht näher gezeigten Antriebskette werden die Stangen 12 in der Nut 11 umlaufend bewegt.

Auf den Stangen 12 sind Mitnehmer 14 in Längsrichtung der Stangen 12, also quer zur Förderrichtung 13 verschieblich geführt. Die Mitnehmer 14 weisen einen Halter 15 auf, mit welchem sie verschieblich auf den Stangen 12 geführt sind, sowie einen Magnetträger 16. Die Mitnehmer 14 sind dabei über den Halter 15 jeweils auf zwei benachbarten Stangen 12 verschieblich geführt, damit sie eine vorbestimmte Orientierung beibehalten. Diese vorbestimmte Orientierung ist im vorliegenden Fall der Gestalt, daß die Magnetträger 16 bezogen auf die Bahn, auf welcher sich die Stangen 12 bewegen und welche durch die Nuten 11 vorgegeben ist, immer radial nach außen zeigen. Die vorbestimmte Orientierung kann aber auch durch beliebige andere Mittel, beispielsweise durch eine Führungsnut in den Stangen 12 oder durch Stangen, welche zwar im mathematischen Sinne als Zylinder ausgebildet sind, aber keinen kreisrunden Querschnitt aufweisen, sichergestellt werden. An der vom Magnetträger 16 abgewandten Seite weist der Halter 15 einen Führungsdorn 17 auf. Der Führungsdorn 17 ist also im vorliegenden Fall bezogen auf die durch die Stangen 12 beschriebe Bahn nach innen gerichtet. Mit diesem Führungsdorn 17 ist der Halter 15 und damit der Mitnehmer 14 in einer nicht näher dargestellten Kulisse geführt, mittels derer der Mitnehmer 14 quer zur Förderrichtung 13, also in Längsrichtung der Stangen 12 verschoben wird. Durch entsprechende Weichen in der Kulisse lassen sich die Mitnehmer 14 so auf unterschiedliche Förderlinien verteilen oder zusammenfassen, je nach dem, was gerade gewünscht ist.

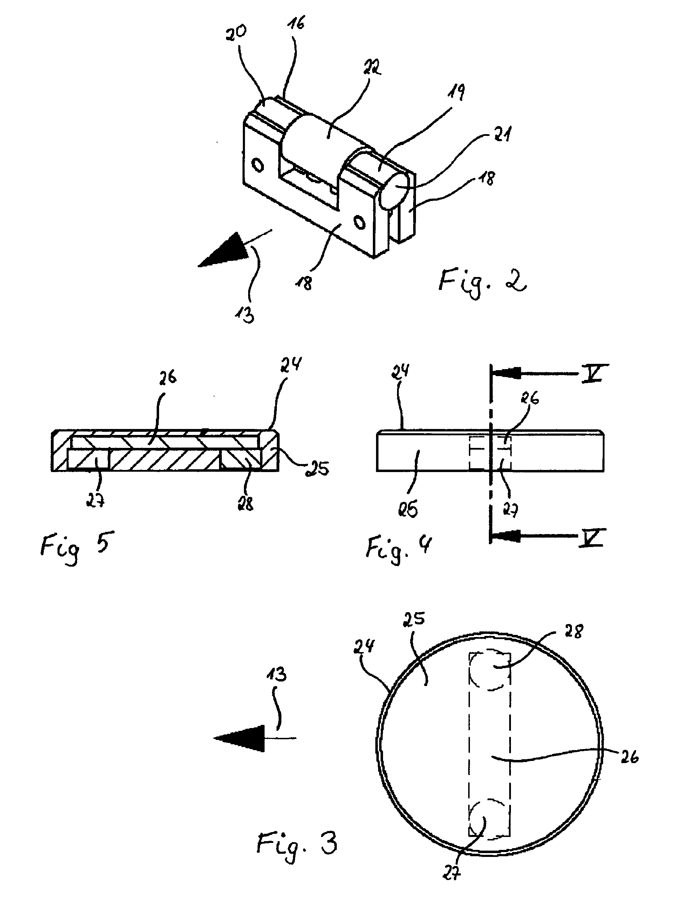

Der in Fig. 2 näher gezeigte Magnetträger 16 weist zwei Lagerbleche 18 auf, welche miteinander verschraubbar sind und dadurch einen Stabmagneten 19 zwischen sich spannen. Der Stabmagnet 19 weist an seinem einen Ende seinen Nordpol 20 und an seinem gegenüberliegenden Ende seinen Südpol 21 auf. Alle Magneten 19 der Fördervorrichtung sollten aus weiter unten noch näher zu erläuternden Gründen die gleiche, vorbekannte Orientierung haben, wobei es auf die konkrete Orientierung nicht ankommt. Selbstverständlich ist es auch möglich, Magnet 19 einzusetzen, welche quer zu ihrer Längserstreckung magnetisiert sind, also beispielsweise an ihrer vom Halter 15 abgewandten Seite den Nord- und an ihrer dem Halter 15 zugewandten Seite dem Südpol aufweisen. Auch hier sollte die Orientierung aller Magneten 19 der Fördereinrichtung gleich sein.

Auf dem Magneten 19 ist eine Gleitrolle 22 gelagert, deren Funktion ebenfalls weiter unten noch näher erläutert wird.

Um die Stangen 12 mit den Mitnehmern 14 ist ein Gurt 23 nach Art eines Förderbandes herumgelegt. Der Gurt 23 wird zusammen mit den Stangen 12 und den Mitnehmern 14 mitbewegt. Er kann alternativ aber auch feststehend ausgebildet sein. Ferner ist es möglich, auf die Stangen eine ebene, nicht bewegte Platten zu legen. Der Gurt 23 bzw. die Platte bilden eine Fangeinrichtung für eventuell herunterfallendes, durch die Fördervorrichtung gefördertes Produkt.

Auf dem Gurt 23 sind Produktträger 24 angeordnet, ohne das diese mit dem Gurt 23 verbunden sind. Sie werden alleine durch den Magneten 19 magnetisch am Gurt 23 gehalten. Dabei ist jedem Produktträger 24 ein Mitnehmer 14 mit Magnet 19 zugeordnet.

Der Produktträger 24 ist in Fig. 3 bis 5 näher gezeigt. Er weist ein in einem Gehäuse 35 gelagerten Metallkern 26 und zwei voneinander beabstandete Magneten 27, 28 auf. Der Abstand zwischen den Magneten 27, 28 ist so bemessen, daß sie an gegenüberliegenden Enden des Magnets 19 des Mitnehmers 14 angeordnet sind. Die Magneten 27, 28 sind so in das Gehäuse 25 eingelegt, daß sie zu den entsprechenden Polen 20, 21 des Magneten 19 entgegengesetzt gerichtet sind, so daß sich die Magneten 27, 28 einerseits und der Magnet 19 andererseits anziehen. Der Metallkern 26 dient dabei der Verbesserung des magnetischen Flusses, ist aber nicht unbedingt erforderlich. Auch kann auf die Magneten 27, 28 einerseits oder den Magneten 19 andererseits verzichtet werden, wenn die magnetischen Anziehungskräfte aufgrund des Magneten 19 einerseits oder der Magneten 27, 28 andererseits ausreichen.

Dadurch das ein stabförmiger Magnet 19 für den Mitnehmer 14 und zwei Magneten 27, 28 für den Produktträger 24 vorgesehen sind, kann sich der Produktträger 24 gegenüber dem Mitnehmer 14 nicht verdrehen. Kommt es allerdings aufgrund der Gestaltung des zu fördernden Produktes auf eine konkrete Orientierung nicht an, kann hierauf auch verzichtet werden.

Durch die umlaufende Bewegung der Stangen 12 und damit der Mitnehmer 14 werden aufgrund der Magnetkräfte zwischen den Magneten 19 einerseits und 27, 28 andererseits auch die Produktträger 24 mitgenommen. Der mitumlaufende Gurt 24 erleichtert dabei diese Transportbewegung, da Reibung zwischen dem Gurt 23 einerseits und den Mitnehmern 14 bzw. den Produktträgern 24 andererseits weitestgehend vermieden wird. Wie aber bereits oben angedeutet ist es nicht unbedingt erforderlich, daß der Gurt 23 mit umläuft.

Werden die Mitnehmer 14 nun aufgrund des Führungsdorns 17 und der nicht näher gezeigten Kulisse in Längsrichtung der Stangen 12, also quer zur Förderrichtung 13 verfahren, wird hierdurch auch der zugehörige Produktträger 24 aufgrund der Magnetkräfte mitgenommen. Der Produktträger 24 gleitet hierdurch quer zur Förderrichtung 13 gesehen auf dem Gurt 23, ebenso wie der Mitnehmer 14 an der Unterseite des Gurtes. Die Gleitrolle 22 um den Stabmagneten 19 vermindert dabei auftretende Reibung. Ebenso ist im vorliegenden Fall auch die dem Gurt 23 zugewandte Unterseite des Produktträgers 24 mit einer Gleitbeschichtung, beispielsweise aus Teflon, versehen.

In Fig. 1 ist pro paar zweier benachbarter Stangen 12 jeweils nur ein Mitnehmer 14 mit zugehörigem Produktträger 24 gezeigt. Selbstverständlich können je nach den gewünschten Erfordernissen innerhalb der Fördervorrichtung auch zwei oder mehr Mitnehmer 14 mit zugehörigem Produktträger 24 in Förderrichtung 13 gesehen nebeneinander pro paar benachbarter Stangen (12) vorgesehen sein.

### Bezugszeichenliste:

- 10: Führungsblech
- 11: Nut
- 12: Stange
- 13: Förderrichtung
- 14: Mitnehmer
- 15: Halter
- 16: Magnetträger
- 17: Führungsdorn
- 18: Lagerblech
- 19: Stabmagnet
- 20: Nordpol
- 21: Südpol
- 22: Gleitrolle
- 23: Gurt
- 24: Produktträger
- 25: Gehäuse
- 26: Kern
- 27: Magnet
- 28: Magnet

## Patentansprüche

1. Fördervorrichtung mit Trägern (24) für das zu fördernde Produkt, wobei die Träger (24) durch Mitnehmer (14) in Förderrichtung (13) transportierbar sind, und zwischen den Trägern (24) und den Mitnehmer (14) eine Fangeinrichtung (23) für von einem Träger (24) herunterfallendes Produkt angeordnet ist, **dadurch gekennzeichnet, dass** die Fangeinrichtung (23) ein umlaufender Gurt ist.

2. Fördervorrichtung nach Anspruch 1, **dadurch gekennzeichnet, daß** der umlaufende Gurt dehnbar ist.

3. Fördervorrichtung nach Anspruch 2, **dadurch gekennzeichnet, daß** der Gurt mit den Mitnehmern (14) und den Trägern (24) umläuft.

4. Fördervorrichtung nach einen der Ansprüche 1 bis 3, **dadurch gekennzeichnet, daß** die Träger (24) und/oder die Mitnehmer (14) mit komplementären Magneten (19; 27, 28) ausgerüstet sind.

5. Fördervorrichtung nach Anspruch 4, **dadurch gekennzeichnet, daß** für jeden Träger (24) und/oder jeden Mitnehmer (14) zwei Magneten (19; 27, 28) vorgesehen sind.

6. Fördervorrichtung nach Anspruch 4 oder 5, **dadurch gekennzeichnet, daß** zwei Magneten (27, 28) mittels eines Kerns (26) miteinander magnetisch verbunden sind.

7. Fördervorrichtung nach einem der Ansprüche 1 bis 6, **dadurch gekennzeichnet, daß** der Träger (24) und/oder die Fangeinrichtung (23) und/oder die Mitnehmer (14) mit einer Reibung vermindernden Beschichtung, insbesondere Teflonbeschichtung, versehen sind.

## Claims

1. Conveying device with carriers (24) for the product being conveyed, wherein the carriers (24) are transportable by guides (14) in the conveying direction (13), and between the carriers (24) and the guide (14) is located a catching device (23) for product falling down from a carrier (24), **characterised in that** the catching device (23) is a revolving belt.

2. Conveying device according to Claim 1, **characterised in that** the revolving belt is flexible.

3. Conveying device according to Claim 2, **characterised in that** the belt revolves with the guides (14) and the carriers (24).

4. Conveying device according to one of Claims 1 to 3, **characterised in that** the carriers (24) and/or the guides (14) are equipped with complementary magnets (19; 27, 28).

5. Conveying device according to Claim 4, **characterised in that** two magnets (19; 27, 28) are provided for each carrier (24) and/or each guide (14).

6. Conveying device according to Claim 4 or 5, **characterised in that** two magnets (27, 28) are magnetically joined together by means of a core (26).

7. Conveying device according to one of Claims 1 to 6, **characterised in that** the carrier (24) and/or the catching device (23) and/or the guides (14) are provided with a low-friction coating, especially Teflon coating.

## Revendications

1. Dispositif de manutention avec des plateaux-supports (24) pour le déplacement de produits, où les plateaux-supports (24) avec des tocs d'entraînement (14) dans le sens de déplacement (13) et/ou entre les plateaux-supports (24), dans lequel un dispositif de prélèvement (23) pour la réception par un plateau-support (24) du produit, **caractérisé en ce que** le dispositif de prélèvement (23) est une bande transporteuse circulaire.

2. Dispositif de manutention selon la revendication 1, **caractérisé en ce que** la bande transporteuse circulaire est élastique.

3. Dispositif de manutention selon la revendication 2, **caractérisé en ce que** la bande transporteuse circule conjointement avec les plateaux-supports (24) et les tocs d'entraînement (14).

4. Dispositif de manutention selon l'une des revendications 1 à 3, **caractérisé en ce que** les plateaux-supports (24) et/ou les tocs d'entraînement (14) sont munis de moyens complémentaires magnétiques.

5. Dispositif de manutention selon la revendication 4, **caractérisé en ce que** chaque plateau-support (24) et/ou chaque toc d'entraînement (14) est pourvu de deux aimants (19, 27, 28).

6. Dispositif de manutention selon la revendication 4 ou 5, **caractérisé en ce que** deux moyens magnétiques (27, 28) sont reliés magnétiquement par un noyau (26) l'un à l'autre.

7. Dispositif de manutention selon l'une des revendications 1 à 6, **caractérisé en ce que** le plateau-support (24) et/ou le dispositif de prélèvement (23) et/ou le toc d'entraînement (14) sont munis d'une mince couche anti-frottement, en particulier en téflon.
